# EUROPÄISCHE PATENTSCHRIFT

(11) **EP 2 781 333 B1**
(45) Veröffentlichungstag und Bekanntmachung des Hinweises auf die Patenterteilung: **03.02.2016**
(21) Anmeldenummer: 14154219.1
(22) Anmeldetag: 06.02.2014
(51) Int. Cl.: B29C 45/27, B23P 15/00

(54) **Komponente für ein Spritzgießwerkzeug, Spritzgießwerkzeug und Verfahren zur Herstellung der Komponente**
Component for an injection moulding tool, injection moulding tool and method for manufacturing such a component
Composants pour un outil de moulage par injection, outil de moulage par injection et procédé de fabrication des composants

(30) Priorität: 21.03.2013 DE 102013102921
(43) Veröffentlichungstag der Anmeldung: 24.09.2014
(73) Patentinhaber: Günther Heisskanaltechnik GmbH, 35066 Frankenberg (DE)
(72) Erfinder: Günther, Herbert, 35108 Allendorf (DE); Schnell, Torsten, 35104 Lichtenfels (DE); Sommer, Siegrid, 35099 Burgwald (DE)
(74) Vertreter: Patentanwälte Olbricht Buchhold Keulertz

(56) Entgegenhaltungen:
- EP-A1- 0 778 117
- DE-A1- 10 004 068
- JP-U- S5 284 978
- US-A- 960 072
- US-A- 3 806 295
- US-A- 4 946 092
- US-A1- 2004 101 589
- US-B1- 6 960 072
- PRINZ H: "WERKZEUGE FUR ANGUSSLOSES SPRITZGIESSEN", PLASTVERARBEITER, HUETHIG GMBH, HEIDELBERG, DE, Bd. 39, Nr. 4, 1. April 1988 (1988-04-01), XP000002825, ISSN: 0032-1338

## Beschreibung

Die Erfindung betrifft eine Komponente für ein Spritzgießwerkzeug gemäß dem Oberbegriff von Anspruch 1, ein Spritzgießwerkzeug mit einer solchen Komponente nach Anspruch 13 und ein Verfahren zur Herstellung einer solchen Komponente nach Anspruch 14.

Spritzgießwerkzeuge werden in der Kunststoffverarbeitung eingesetzt. Sie haben meist eine erste Werkzeughälfte, die eine fließfähige Kunststoffmasse bei einer vorgebbaren Temperatur unter hohem Druck einer von der ersten Werkzeughälfte trennbaren zweiten Werkzeughälfte (Formnest) zuführt. Die erste Werkzeughälfte umfasst gewöhnlich mehrere Komponenten, wie z.B. eine Aufspannplatte, eine Verteilerplatte, mehrere daran angeschlossene Spritzgießdüsen, Distanzstücke sowie eine Heizvorrichtung mit Temperaturüberwachung. Die Verteilerplatte hat meist eine zentrale Zufuhrstelle sowie innerhalb der Verteilerplatte ausgebildete Verteilerkanäle, welche die Kunststoffmasse möglichst gleichmäßig den Spritzgießdüsen zuführen. Jede Spritzgießdüse hat in einem Materialrohr einen Strömungskanal, der mit einem Verteilerkanal in der Verteilerplatte strömungsverbunden ist und der an seinem der zweiten Werkzeughälfte zugewandten Ende in einer Düsenspitze mündet. Die Spritzgießdüsen werden fest mit dem Verteiler verbunden, beispielsweise durch Einschrauben oder mittels einer Flanschverbindung. Eine zusätzliche Abdichtung soll für eine dichte Verbindung zwischen der Verteilerplatte und den Spritzgießdüsen sorgen.

Problematisch hierbei ist, dass der Montageaufwand für die erste Werkzeughälfte relativ hoch ist, weil die Spritzgießdüsen oft erst beim Montieren des gesamten Werkzeugs an der Verteilerplatte befestigt werden. Dazu ist entsprechender Platz notwendig, sowohl um die Düsen einsetzen als auch um sie fixieren zu können. Zudem können Montagefehler auftreten, die den späteren Produktionsablauf stören. So müssen beispielsweise die Spritzgießdüsen und die Verteilerplatte derart gegeneinander verspannt sein, dass die Schnittstelle auch im kalten Betriebszustand des Werkzeugs eine bereits dichte Verbindung gewährleistet. Andererseits muss die Verschraubung zwischen Düse und Verteilerplatte eine ausreichende Wärmedehnung zulassen, damit keine unzulässig hohen Spannungskräfte entstehen, die zu einem Abreißen der Düsen führen können. Mithin können aufgrund der relativ häufigen und meist hohen Temperaturwechsel innerhalb des Werkzeugs an den Schnittstellen zwischen den Spritzgießdüsen und der Verteilerplatte Undichtigkeiten auftreten.

Um dem zu begegnen, schlägt DE 40 41 532 A1 vor, die Verteilerplatte und die daran angeschlossenen Spritzgießdüsen zu einem Verbundkörper zu vergießen. Dazu werden die Verteilerkanäle innerhalb der Verteilerplatte und die Strömungskanäle innerhalb der Spritzgießdüsen jeweils von durchgehenden Rohren gebildet, die in einem metallischen Gehäuse angeordnet werden. Letzteres wird anschließend mit Kupfer oder einer Kupferlegierung ausgegossen, so dass ein Verbundkörper umfassend die Verteilerplatte und die Spritzgießdüsen entsteht. Innerhalb des Kupferblocks sind zudem Heizrohre eingegossen, deren elektrische Anschlussleitungen zu einem gemeinsamen Versorgungsanschluss geführt sind. Die Heizrohre sollen die in den durchgehenden Rohren geführte Kunststoffschmelze auf einer möglichst konstanten Temperatur halten.

Die Herstellung einer solchen Komponente für eine Werkzeughälfte eines Spritzgießwerkzeugs ist relativ aufwendig und teuer, weil zunächst ein Gehäuse mit einem im Wesentlichen quaderförmigen Abschnitt für die Verteilerplatte und mehreren daran angeschweißten zylindrischen Abschnitten für die Spritzgießdüsen hergestellt werden muss. Anschließend sind die durchgehenden Rohre sowie die Heizrohre innerhalb des Gehäuses zu positionieren und zu fixieren, damit sich die einzelnen Elemente beim Ausgießen des Gehäuses nicht verschieben.

Ein weiterer Nachteil dieser Anordnung besteht darin, dass die separat ausgebildeten Gehäuseabschnitte für die Spritzgießdüsen relativ viel Platz einnehmen, so dass die Düsenspitzen der einzelnen Spritzgießdüsen nicht ausreichend dicht nebeneinander positioniert werden können. Die Nestabstände sind relativ groß. In zahlreichen Anwendungsbereichen ist es aber erforderlich, möglichst kleine Nestabstände zu realisieren, um separate Kavitäten gleichzeitig oder kompliziertere Bauteile in geringen Abständen mehrfach anspritzen zu können.

Von Nachteil ist ferner, dass die Heizvorrichtung in den Kupferblock eingegossen ist. Treten an der Heizung Schäden auf, kann diese nicht ausgebaut und durch eine neue Heizung ersetzt werden. Die gesamte Komponente, bestehend aus Verteilerplatte, Spritzgießdüsen, Heizrohren und Temperaturfühler, muss ausgewechselt werden, was zu unnötigen Stillstandzeiten führt und sich ungünstig auf die Betriebskosten der Spritzgießvorrichtung auswirkt. Weiterer Stand der Technik ist aus der DE 100 04 068 und der US 2004/0101589 bekannt.

Ziel der Erfindung ist es eine Komponente für ein Spritzgießwerkzeug, umfassend eine Verteilerplatte und wenigstens zwei Materialrohre, zu schaffen, die mit einfachen Mitteln kostengünstig herstellbar und leicht handzuhaben ist wobei eine dichte Anordnung der Spritzgießdüsen an der Verteilerplatte mit sehr engen Nestabständen realisiert wird.

Hauptmerkmale der Erfindung sind im kennzeichnenden Teil von Anspruch 1 sowie den nebengeordneten Ansprüchen 11 und 12 angegeben. Ausgestaltungen sind Gegenstand der Ansprüche 2 bis 10. Der Oberbegriff des Anspruchs 1 geht von der US 2004/0101589 aus.

Eine derartige erfindungsgemäße Komponente für ein Spritzgießwerkzeug hat den Vorteil, dass mehrere Materialrohre eng benachbart angeordnet werden können. Eine Montage von Materialrohren an einer herkömmlichen Verteilerplatte entfällt. Es wird erfindungsgemäß auf Dicht- und Befestigungsmittel zwischen der Verteilerplatte und den Materialrohren verzichtet. Vielmehr bildet die erste Verteilerplatte gemeinsam mit den Materialrohren eine monolithische Einheit. Ohne derartige Dicht- und Befestigungsmittel entfällt erfindungsgemäß der im Stand der Technik notwendige Montagefreiraum. Zudem bestehen durch die einstückige, monolithische Ausgestaltung zwischen Materialrohr und Verteilerplatte auch bei großen Temperaturschwankungen keine Dichtigkeitsprobleme. Die Herstellung der monolithischen Einheit ist insbesondere durch eine Fertigung aus einem monolithischen Materialblock möglich, vorzugsweise aus einem Eisenblock. Schließlich sind auch die Speisekanäle in der ersten Verteilerplatte und die Strömungskanäle in den Materialrohren vom Monolithen ausbildbar. Insgesamt ist somit die Anzahl notwendiger Einzelteile sehr gering. Montagefehler werden so vermieden und die Herstellkosten können geringer sein.

In einer Weiterbildung der Erfindung ist vorgesehen, dass der Verteiler eine zweite Verteilerplatte aufweist, die an der Oberseite der ersten Verteilerplatte anliegt, wobei in der Trennebene zwischen der ersten und der zweiten Verteilerplatte Verteilerkanäle ausgebildet sind, welche eine Einlassöffnung mit den Speisekanälen in der ersten Verteilerplatte strömungsverbinden.

Auf diese Weise wird eine äußerst kompakte und einfache Ausgestaltung der Komponente umfassend einen Verteiler und Materialrohre erreicht. Die Anzahl möglicher Dichtungsstellen ist zudem gering. Es bietet sich an, eine einzige Einlassöffnung vorzusehen, welche insbesondere mit einer Maschinendüse verbindbar ist. Fertigungstechnisch werden die Speisekanäle und/oder die Strömungskanäle linear ausgebildet, beispielsweise durch eine Bohrung. Außerdem ist ein koaxiales Fluchten von je einem Strömungskanal und einem Speisekanal günstig. Dann genügt gegebenenfalls ein einziger Arbeitsschritt zur Herstellung eines Strömungskanals und eines Speisekanals.

In einer speziellen Fortentwicklung ist vorgesehen, dass die Verteilerkanäle durch Nuten in der ersten Verteilerplatte und/oder in der zweiten Verteilerplatte ausgebildet sind. Derartige Nuten lassen sich auf einfache Weise, beispielsweise durch Fräsen herstellen. Wird nur eine der Verteilerplatten mit Nuten versehen, ist dies besonders kostengünstig. Strömungstechnisch ist jedoch eine Ausbildung mit gegenüberliegenden Nuten zu bevorzugen, um scharfe Radien im Querschnitt der Verteilerkanäle zu vermeiden. Ein weiterer Vorteil der Nuten liegt darin, dass diese strömungsgünstiger auslegbar sind als Bohrungen hergestellte Kanäle, z.B. mit größeren Radien bei Richtungswechseln. Durch die hohe Flexibilität hinsichtlich der Nuttiefe und Nutbreite ist außerdem eine sehr gute Balancierung realisierbar.

Weiterhin sieht eine nähere Ausgestaltung der Erfindung vor, dass der Verteiler eine erste Heizvorrichtung aufweist. Damit ist eine die Verteilerkanäle und die Speisekanäle durchströmende fluidisierte Masse temperierbar. Ein Verstopfen der Kanäle wird verhindert. Außerdem ist die Bauteilqualität durch das Einstellen der Temperatur positiv beeinflussbar. Als mögliche Ausgestaltung kommt ein Einlegen einer Heizwendel in eine Nut in der ersten und/oder der zweiten Verteilerplatte in Betracht. Alternativ oder ergänzend können Heizpatronen in Öffnungen in der ersten und/oder der zweiten Verteilerplatte eingesetzt werden. Eine weitere Alternative oder Ergänzung bilden auf die erste und/oder zweite Verteilerplatte aufgetragene Heizschichten, z.B. in Dick- oder Dünnschichttechnologie.

Durch eine optionale Ausgestaltung, bei welcher je ein Speisekanal in je einen Strömungskanal mündet, sind diese Kanäle besonders einfach und kostengünstig in die monolithische Einheit, umfassend die erste Verteilerplatte und die Materialrohre, einbringbar. Außerdem ist eine hohe Kompaktheit erzielbar.

Benachbarte Materialrohre sind wenigstens an ihren freien Enden um einen Spalt voneinander beabstandet. Der Spalt separiert die Materialrohre mithin an deren freien Ende. Damit können sich die Materialrohre in diesem Bereich unabhängig voneinander thermisch ausdehnen. Es entstehen keine thermischen Verformungen, die von einem Materialrohr auf das nächste übertragen werden (zumindest im Rahmen der Spaltbreite). Die Dichtung am freien Ende des Materialrohrs gegenüber einer Angussöffnung ist durch gleichmäßigere thermische Spannungen weniger stark ungleichmäßig beansprucht. Hierdurch kommt es selten zu einem Versagen dieser Dichtung. Um diese Bewegungsfreiheit zu erreichen, sollte sich der Spalt über wenigstens zwei Drittel der Länge der benachbarten Materialrohre erstrecken. Vorzugsweise erstreckt sich der Spalt so weit wie möglich, d.h. möglichst bis an die Verteilerplatte heran.

Zur Erzielung einer besonders hohen Kompaktheit, sieht die Erfindung vor, daß der Spalt kleiner als 2 mm ist. Bevorzugt ist der Spalt kleiner als 1 mm und besonders bevorzugt kleiner als 0,5 mm. Erfindungsgemäß ist der Spalt ein Laserschnitt, ein Drahtschnitt oder eine Erosion, insbesondere eine Drahterosion. Hiermit werden sehr kleine Spaltmaße erzielt; mit einem Drahtschnitt beispielsweise Spaltbreiten von 0,3 mm bis 0,4 mm.

Zur Bereitstellung von korrekt temperierter fluidisierter Masse wird von einer Ergänzung der Erfindung vorgeschlagen, dass den Materialrohren eine zweite Heizvorrichtung zugeordnet ist.

Zur Beheizung sehr eng benachbarter Materialrohre bietet sich eine spezielle Ausgestaltung an, bei welcher die zweite Heizvorrichtung ein Heizelement aufweist, das berührend mit wenigstens zwei Materialrohren thermisch gekoppelt ist. Damit teilen sich die wenigstens zwei Materialrohre ein gemeinsames Heizelement, was platzsparend und kostengünstig ist. In einer speziellen Ausgestaltung umfasst die zweite Heizvorrichtung eine Heizplatte, welche mit einer Kontaktfläche an wenigstens zwei Materialrohren anliegt, vorzugsweise an diesen befestigt ist. Dies ist einfach und kostengünstig. Bevorzugt ist die Kontaktfläche im Wesentlichen eben. Hierfür sollten die Materialrohre eine seitliche Abflachung aufweisen, damit die Kontaktfläche möglichst groß ist. Auch bei unterschiedlichen thermischen Ausdehnungen der Materialrohre und der Heizplatte bleibt die Kontaktfläche bei entsprechender Anpresskraft erhalten. Somit kann auch ein bevorzugtes Material wie chemisch vernickelter Messing für die Heizplatten eingesetzt werden. Zur Bewirkung der Anpresskraft sollte die Heizplatte mit Hilfe eines Befestigungsmittels an wenigstens einem Materialrohr festgelegt sein. Es bietet sich eine lösbare Schraubverbindung an. Damit die einzelnen Materialrohre nicht über die Heizplatte thermische Spannungen auf benachbarte Materialrohre übertragen, ist eine schwimmende Lagerung der Heizplatte an den Materialrohren zu bevorzugen, beispielsweise durch eine Kombination von Schrauben und länglichen Durchgangslöchern. Zur Vermeidung ungleicher thermischer Erwärmung bietet es sich weiterhin an, in Reihe angeordnete Materialrohre zwischen zwei gegenüberliegenden Heizplatten anzuordnen. Die zweite Heizplatte ist entsprechend der ersten ausbildbar.

Gemäß einer weiteren ergänzenden oder alternativen Ausgestaltung ist vorgesehen, dass das Heizelement wenigstens eine Heizpatrone aufweist, die in eine parallel zum Strömungskanal eines Materialrohrs ausgebildete Ausnehmung in einem Materialrohr eingesetzt ist. Heizpatronen eignen sich insbesondere gut für in Reihe benachbarter Materialrohre, da sich dessen Dimension durch die Heizpatrone nur in eine Richtung vergrößert. Diese Richtung ist bevorzugt quer zur Reihe. Die weiteren Vorteile einer Heizpatrone sind insbesondere deren einfache Gestaltung, einfache Montage und in der Ausnehmung geschützte Anordnung.

Vorzugsweise ist die Ausnehmung eine Bohrung in dem Materialrohr. Alternativ könnte die Ausnehmung statt als Bohrung auch als Nut ausgebildet sein.

In einer speziellen Variante setzt sich die Ausnehmung für die Heizpatrone durch die erste Verteilerplatte hindurch fort, wobei das Anschlusskabel der Heizpatrone außerhalb der ersten Verteilerplatte und außerhalb des Materialrohrs angeordnet ist. Hierdurch können Anschlusskabel der Heizpatrone durch den Verteiler einfach aus dem beengten Bauraum herausgeführt werden. Gleichzeitig sind die Anschlusskabel der Heizpatrone außerhalb der heißen Verteilerplatte positionierbar. Schäden an dem hitzeempfindlichen Anschluss, insbesondere einer dort angeordneten Vercrimpung des Kabels, werden so vermieden. Außerdem sind die Heizpatronen bei einem Defekt einfach austauschbar. Vorzugsweise wird die Ausnehmung durch den gesamten Verteiler hindurch ausgeführt. Wenn die Ausnehmung auch am freien Ende des Materialrohrs offen ausgebildet wird, so kann die Patrone bei einem Verklemmen aus der Ausnehmung ausgetrieben werden. Idealerweise wird die Heizpatrone mit einem Haltemittel in ihrer Position gehalten, sodass eine korrekte Temperaturführung sichergestellt ist.

In einer Fortbildung der Erfindung münden die Strömungskanäle an den freien Enden der Materialrohre jeweils in ein Düsenmundstück. Düsenmundstücke bieten den Vorteil, dass eine defekte Dichtung zu einer Angussöffnung durch einen Austausch des Mundstücks reparierbar ist. Zudem lassen sich kompliziert zu fertigende Geometrien, welche im Bereich der Angussöffnung notwendig sind, besonders einfach an einem kleinen Einzelteil wie dem Düsenmundstück anfertigen. Das Düsenmundstück ist zudem aus einem vom Materialrohr abweichenden Material herstellbar, insbesondere aus einem gut wärmeleitenden und verschleißfesten Material. Das Düsenmundstück wird typischerweise in das Materialrohr eingesetzt. Sowohl teleskopierbare Steckverbindungen als auch Schraubverbindungen zwischen dem Düsenmundstück und dem Materialrohr können je nach Anforderung ausgewählt werden.

Eine Ergänzung sieht vor, dass wenigstens ein Düsenmundstück mit einer Verschlussnadel korrespondiert. Mithin ist wenigstens eine Angussöffnung durch Betätigung der Verschlussnadel öffen- und schließbar. Entsprechend kann das Füllverhalten eines Formnestes positiv beeinflusst werden.

Die Erfindung betrifft weiterhin ein Spritzgießwerkzeug mit einer zuvor beschriebenen Komponente für ein Spritzgießwerkzeug, wobei die Strömungskanäle der Materialrohre an deren freien Enden mit Angussöffnungen einer Formplatte strömungsverbunden sind, wobei die Angussöffnungen in wenigstens ein Formnest in der Formplatte münden. Mithin ergibt sich im Zusammenbau eine Spritzgießvorrichtung mit den beschriebenen Vorteilen der Komponente.

Von einer näheren Ausgestaltung des Spritzgießwerkzeugs ist eine zentrale Maschinendüse mit dem Verteiler strömungsverbunden, insbesondere über die Einlassöffnung. Die Einlassöffnung kann in speziellen Anwendungsfällen in der ersten Verteilerplatte angeordnet sein, bevorzugt ist sie jedoch den Materialrohren gegenüberliegend in der zweiten Verteilerplatte angeordnet.

Außerdem betrifft die Erfindung ein Verfahren zur Herstellung einer zuvor beschriebenen Komponente für ein Spritzgießwerkzeug, bei dem eine erste Verteilerplatte eines Verteilers mit einer Oberseite und einer Unterseite sowie wenigstens zwei Materialrohre, die quer zur Unterseite der ersten Verteilerplatte ausgerichtet und auf der Unterseite mit der ersten Verteilerplatte verbunden sind, wobei benachbarte Materialrohre wenigstens an ihren freien Enden um einem Spalt kleiner Zum voneinander beabstandet sind, wobei der Spalt ein Laserschnitt, ein Drahtschnitt oder eine Erosion ist aus einem monolithischen Materialblock herausgearbeitet werden, und zudem jeweils ein Strömungskanal in jedes Materialrohr sowie Speisekanäle in die erste Verteilerplatte eingebracht werden, wobei die Speisekanäle auf der Unterseite der ersten Verteilerplatte in die Strömungskanäle der Materialrohre münden und auf der Oberseite der ersten Verteilerplatte offen ausgebildet sind.

Durch dieses vorteilhafte Verfahren wird eine monolithische Einheit umfassend die erste Verteilerplatte und die Materialrohre erhalten. Die Vorteile dieser monolithischen Einheit entsprechen den oben beschriebenen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Komponente für ein Spritzgießwerkzeug umfassend eine Verteilerplatte und neun Materialrohre, wobei die erste Verteilerplatte gemeinsam mit den Materialrohren monolithisch ausgebildet ist;
- Fig. 2: eine perspektivische Ansicht einer Komponente für ein Spritzgießwerkzeug wie in Fig. 1 dargestellt, ergänzt um eine zweite Verteilerplatte und eine zweite Heizvorrichtung;
- Fig. 3: eine transparente Darstellung der in Fig. 2 gezeigten Komponente;
- Fig. 4: eine Ansicht der Oberseite der ersten Verteilerplatte gemäß den Fig. 1 bis 3, insbesondere der dort eingebrachten Verteiler- und Speisekanäle;
- Fig. 5: eine perspektivische Ansicht der in den Fig. 2 und 3 dargestellten Komponente aus Richtung der freien Enden der Materialrohre, wobei der Verteiler im Hintergrund nicht mit dargestellt ist;
- Fig. 6: einen Längsschnitt durch die in den Fig. 2 und 3 dargestellten Komponent;
- Fig. 7: einen Ausschnitt eines Längsschnittes durch ein Spritzgießwerkzeug umfassend eine Komponente wie in den Fig. 2 und 3 dargestellt;
- Fig. 8: einen Ausschnitt eines Längsschnittes durch die in den Fig. 2 und 3 dargestellte Komponente, wobei zwei unterschiedliche Düsenmundstücke in zwei benachbarte Materialrohre eingesetzt sind;
- Fig. 9: eine Abwandlung der in den Fig. 2 und 3 dargestellten Komponente aus Richtung der freien Enden der Materialrohre, wobei eine gekrümmte Anlagefläche zwischen der zweiten Heizvorrichtung und den Materialrohren ausgebildet ist, und wobei der Verteiler im Hintergrund nicht mit dargestellt ist;
- Fig. 10: eine perspektivische Ansicht einer Komponente für ein Spritzgießwerkzeug wobei eine zweite Heizvorrichtung mit Heizpatronen vorgesehen ist;
- Fig. 11: einen Längsschnitt durch die in Fig. 10 dargestellte Komponente; und
- Fig. 12: eine Ansicht der Oberseite der ersten Verteilerplatte gemäß Fig. 10, insbesondere der dort eingebrachten Verteiler- und Speisekanäle.

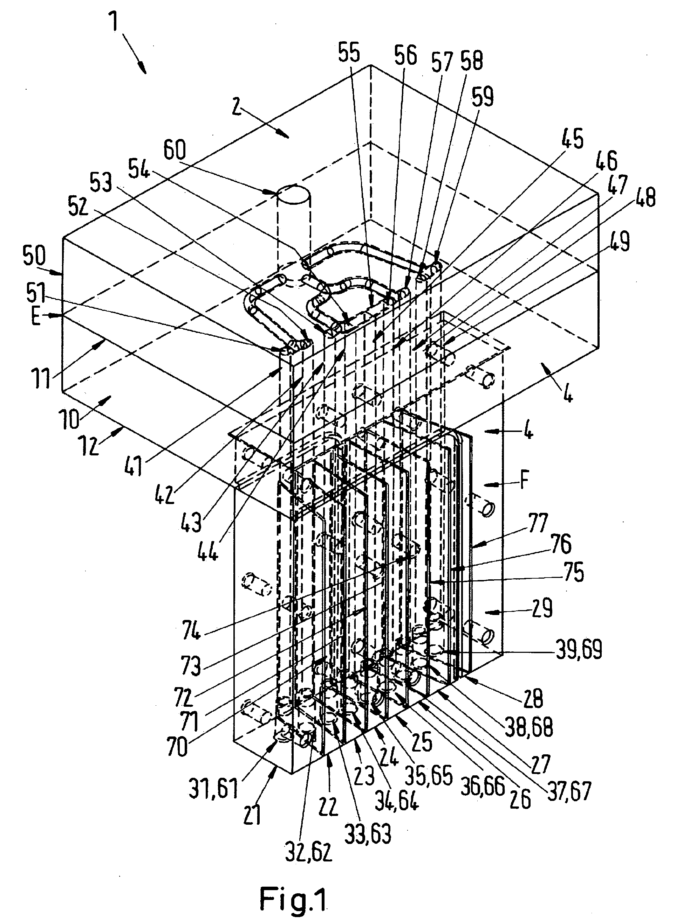

Fig. 1 zeigt eine perspektivische Ansicht einer Komponente 1 für ein Spritzgießwerkzeug. Diese umfasst einen Verteiler 2 mit einer ersten Verteilerplatte 10, einer zweiten Verteilerplatte 50 und neun Materialrohre 21, 22, 23, 24, 25, 26, 27, 28, 29. Die erste Verteilerplatte 10 bildet gemeinsam mit den Materialrohren 21, 22, 23, 24, 25, 26, 27, 28, 29 einen Monolithen 4, welcher aus einem monolithischen Materialblock hergestellt ist.

Wie man erkennt, hat die erste Verteilerplatte 10 eine Oberseite 11 und eine Unterseite 12. Die Materialrohre 21, 22, 23, 24, 25, 26, 27, 28, 29 sind quer zur Unterseite 12 der ersten Verteilerplatte 10 ausgerichtet, hier insbesondere senkrecht bzw. lotrecht. Auf der Unterseite 12 sind die Materialrohre 21, 22, 23, 24, 25, 26, 27, 28, 29 mit der ersten Verteilerplatte 10 verbunden, bzw. besteht hier ein Übergang innerhalb des Monolithen 4 von der ersten Verteilerplatte 10 hin zu den Materialrohren 21, 22, 23, 24, 25, 26, 27, 28, 29. Die Materialrohre 21, 22, 23, 24, 25, 26, 27, 28, 29 sind ein einer Reihe benachbart zueinander angeordnet. Insbesondere liegt die Reihe entlang einer gekrümmten Linie.

In jedem Materialrohr 21, 22, 23, 24, 25, 26, 27, 28, 29 ist ein Strömungskanal 31, 32, 33, 34, 35, 36, 37, 38, 39 ausgebildet. Diese sind zylindrische Löcher, deren Längsachsen ebenfalls quer zur Unterseite 12 der ersten Verteilerplatte 10, insbesondere senkrecht/lotrecht zu dieser, ausgerichtet sind. Relativ zueinander sind die Längsachsen der zylindrischen Löcher (Bohrungen) parallel.

Im Bereich der ersten Verteilerplatte 10 sind Speisekanäle 41, 42, 43, 44, 45, 46, 47, 48, 49 im Monolithen 4 ausgebildet. Diese münden auf der Unterseite 12 der ersten Verteilerplatte 10 in die Strömungskanäle 31, 32, 33, 34, 35, 36, 37, 38, 39 der Materialrohre 21, 22, 23, 24, 25, 26, 27, 28, 29. Hier mündet insbesondere je ein Speisekanal 41, 42, 43, 44, 45, 46, 47, 48, 49 in je einen Strömungskanal 31, 32, 33, 34, 35, 36, 37, 38, 39. Auf der Oberseite 11 der ersten Verteilerplatte 10 sind die Speisekanäle 41, 42, 43, 44, 45, 46, 47, 48, 49 offen ausgebildet. Man erkennt weiterhin, dass die Speisekanäle 41, 42, 43, 44, 45, 46, 47, 48, 49 der ersten Verteilerplatte 10 und die Strömungskanäle 31, 32, 33, 34, 35, 36, 37, 38, 39 der Materialrohre 21, 22, 23, 24, 25, 26, 27, 28, 29 linear sowie fluchtend zueinander sind. Sie gehen nämlich koaxial ineinander über.

Auf der Oberseite 11 der ersten Verteilerplatte 10 sieht man Verteilerkanäle 51, 52, 53, 54, 55, 56, 57, 58, 59, die durch Nuten in der ersten Verteilerplatte 10 ausgebildet sind. Diese verbinden die Speisekanäle 41, 42, 43, 44, 45, 46, 47, 48, 49 strömungstechnisch mit einer zentralen Einlassöffnung 60. Geschlossen werden die Verteilerkanäle 51, 52, 53, 54, 55, 56, 57, 58, 59 durch eine auf der Oberseite 11 der ersten Verteilerplatte 10 aufliegende zweite Verteilerplatte 50. Gemeinsam bilden die erste und zweite Verteilerplatte 10, 50 den Verteiler 2 aus, wobei die Verteilerkanäle 51, 52, 53, 54, 55, 56, 57, 58, 59 in deren Trennebene E liegen. Die Einlassöffnung 60 ist hierbei als Bohrung durch die zweite Verteilerplatte 50 ausgeführt.

Am unteren Bildende der Darstellung haben die Materialrohre 21, 22, 23, 24, 25, 26, 27, 28, 29 freie Enden 61, 62, 63, 64, 65, 66, 67, 68, 69. Hier sind zueinander benachbarte Materialrohre 21, 22, 23, 24, 25, 26, 27, 28, 29 jeweils um einen Spalt 70, 71, 72, 73, 74, 75, 76, 77 voneinander beabstandet. In realen Dimensionen ist jeder Spalt 70, 71, 72, 73, 74, 75, 76, 77 kleiner (bzw. schmäler) als 2 mm. Hergestellt werden die Spalte 70, 71, 72, 73, 74, 75, 76, 77 durch Drahtschnitt, Laserschnitt oder Erosion, insbesondere Drahterosion. In diesem Zusammenhang ist gut zu erkennen, dass die Materialrohre 21, 22, 23, 24, 25, 26, 27, 28, 29 eine einheitliche Länge aufweisen. Die freien Enden 61, 62, 63, 64, 65, 66, 67, 68, 69 enden daher in einer gemeinsamen Ebene.

Weiterhin erstreckt sich der Spalt 70, 71, 72, 73, 74, 75, 76, 77 über wenigstens zwei Drittel der Länge der jeweils benachbarten Materialrohre 21, 22, 23, 24, 25, 26, 27, 28, 29, hier nämlich über deren gesamte Länge, insbesondere bis zur Unterseite 12 der ersten Verteilerplatte 10.

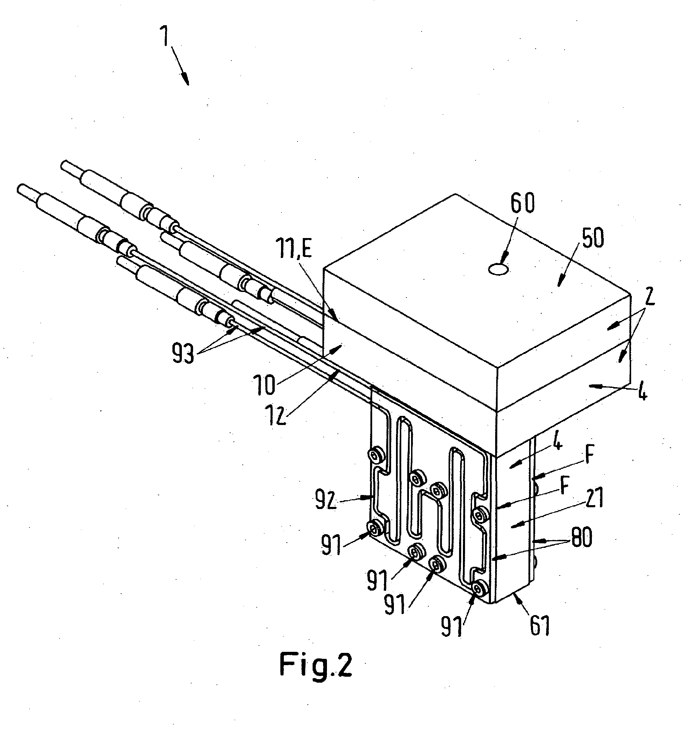

Ein wie zuvor beschriebener Monolith 4 findet sich in verschiedenen Perspektiven, Schnitten und Ausschnitten in den weiteren Fig. 2 bis 12 wieder.

Im speziellen weist Fig. 1 eine sich über alle in einer Reihe angeordneten neun Materialrohre 21, 22, 23, 24, 25, 26, 27, 28, 29, erstreckende seitliche Kontaktfläche F auf, die eben ist. Jedes Materialrohr hat also eine seitliche Abflachung. Insbesondere sind dies zwei parallel zueinander sowie gegenüberliegende Abflachungen. Eine derartige Ausbildung ist der im Folgenden in den Fig. 2 bis 8 gewählten zweiten Heizvorrichtung 80 geschuldet.

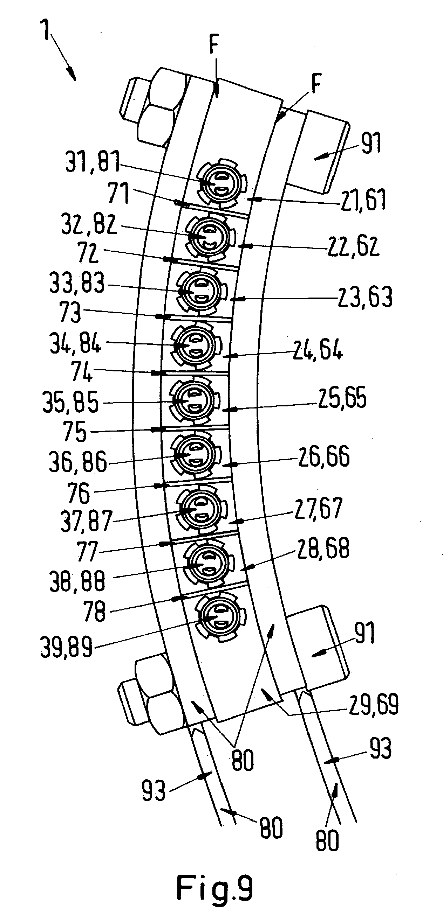

Die in Fig. 9 gezeigten Materialrohre 21, 22, 23, 24, 25, 26, 27, 28, 29 liegen ebenfalls in einer Reihe auf einem Krümmungsradius. Allerdings ist die Kontaktfläche F hier ebenfalls gekrümmt. Sie folgt nämlich der Krümmung der Reihe der Materialrohre 21, 22, 23, 24, 25, 26, 27, 28, 29. Auf diese Weise ist die Kontaktfläche F einheitlich zu den Strömungskanälen 31, 32, 33, 34, 35, 36, 37, 38, 39 beabstandet.

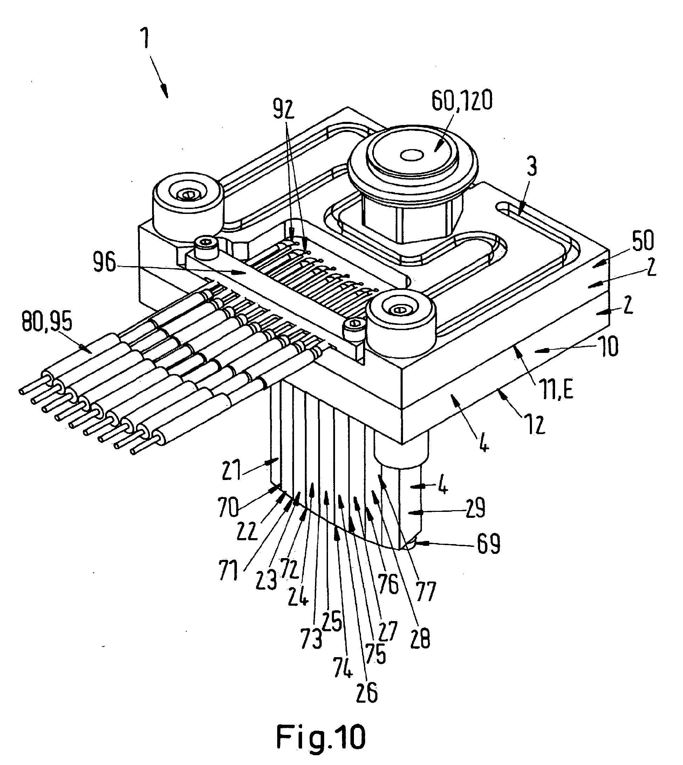

Die Ausgestaltung der Materialrohre 21, 22, 23, 24, 25, 26, 27, 28, 29 gemäß der in den Fig. 10 bis 12 gezeigten Ausführungsform unterscheidet sich von der in Fig. 1 gezeigten dadurch, dass zur Aufnahme jeweils einer Heizpatrone 95 in jedes Materialrohr 21, 22, 23, 24, 25, 26, 27, 28, 29 eine parallel zum Strömungskanal 31, 32, 33, 34, 35, 36, 37, 38, 39 verlaufende Ausnehmung 92 eingebracht ist. Hier insbesondere zylindrische Bohrungen. Jede Ausnehmung 92 ist am freien Ende 61, 62, 63, 64, 65, 66, 67, 68, 69 des jeweiligen Materialrohrs 21, 22, 23, 24, 25, 26, 27, 28, 29 offen ausgebildet. Gegenüberliegend führen die Ausnehmungen 92 durch die erste Verteilerplatte 10 hindurch.

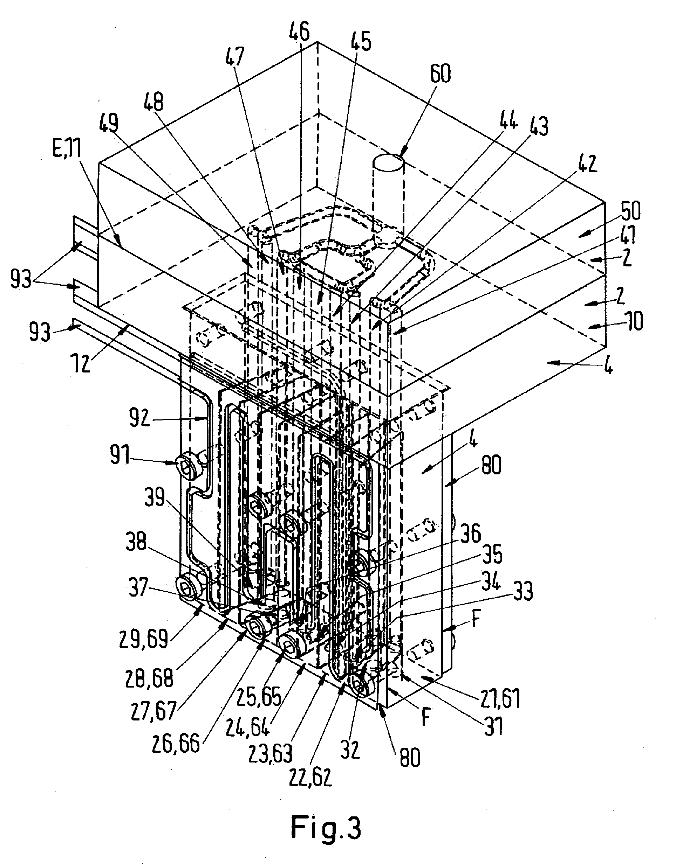

Fig. 2 zeigt eine perspektivische Ansicht einer Komponente 1 für ein Spritzgießwerkzeug, welche die Komponente gemäß Fig. 1 umfasst und im Wesentlichen um eine zweite Verteilerplatte 50 und eine zweite Heizvorrichtung 80 ergänzt ist. Fig. 3 enthält einen vergrößerten Ausschnitt von Fig. 2, der jedoch alle für die Beschreibung relevanten Merkmale enthält. Der Ausschnitt ist zur Kenntlichmachung von innen liegenden Merkmalen transparent dargestellt.

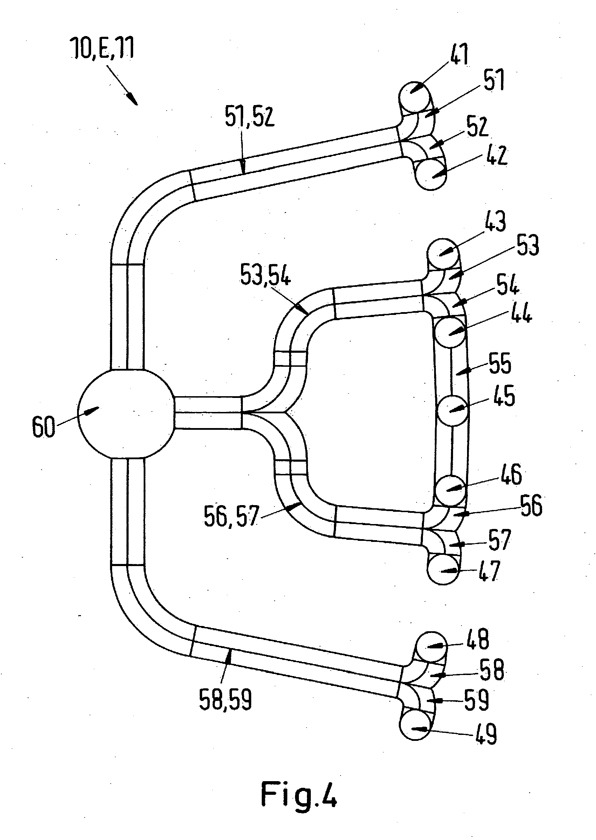

Zunächst erkennt man in den Fig. 2 und 3, dass sich der Verteiler 2 aus der ersten Verteilerplatte 10 und einer zweiten Verteilerplatte 50 zusammensetzt. Die zweite Verteilerplatte 50 liegt an der Oberseite 11 der ersten Verteilerplatte 10 an. Nur in Fig. 3 ist zu sehen, dass in der Trennebene E zwischen der ersten und der zweiten Verteilerplatte 10, 50 Verteilerkanäle (51, 52, 53, 54, 55, 56, 57, 58, 59) ausgebildet sind, welche eine einzige, zentrale Einlassöffnung 60 mit den Speisekanälen 41, 42, 43, 44, 45, 46, 47, 48, 49 in der ersten Verteilerplatte 10 strömungsverbinden. Die Nummerierung der Verteilerkanäle 51, 52, 53, 54, 55, 56, 57, 58, 59 ist ausschließlich Fig. 4 entnehmbar, welche eine Ansicht der Oberseite 11 der ersten Verteilerplatte 11 gemäß den Fig. 1 bis 3 enthält. Die Verteilerkanäle 51, 52, 53, 54, 55, 56, 57, 58, 59 in Fig. 3 sind insbesondere durch Nuten in der ersten Verteilerplatte 10 und Nuten in der zweiten Verteilerplatte 50 ausgebildet, die sich gegenüberliegen. Die Nuten haben zumindest Abschnittsweise jeweils einen halbkreisförmigen Querschnitt.

Den Materialrohren 21, 22, 23, 24, 25, 26, 27, 28, 29 ist in den Fig. 2 und 3 eine zweite Heizvorrichtung 80 zugeordnet. Diese weist zwei Heizelemente 80 auf, die jeweils berührend mit den neun Materialrohren 21, 22, 23, 24, 25, 26, 27, 28, 29 thermisch gekoppelt sind.

In der gezeigten Ausgestaltung sind die Heizelemente 80 als Heizplatten ausgestaltet, welche jeweils über eine von zwei gegenüberliegenden Kontaktflächen F an den Materialrohren 21, 22, 23, 24, 25, 26, 27, 28, 29 anliegen. Die Materialrohre 21, 22, 23, 24, 25, 26, 27, 28, 29 befinden sich mithin in einer Sandwichposition zwischen den beiden Heizplatten. Entsprechend der Geometrie von Fig. 1 sind die Kontaktflächen F gemäß der Fig. 2 und 3 eben.

Zur Fixierung der Heizplatten und zur Bewirkung einer Anpresskraft zwischen den Heizplatten und den Materialrohren sind diese mit Hilfe von Befestigungsmitteln 91 an vier der neun Materialrohre 21, 22, 23, 24, 25, 26, 27, 28, 29 festgelegt. Hierfür sind acht Schrauben vorgesehen. Diese erstrecken sich jeweils durch die erste Heizplatte, ein Loch einem Materialrohr und durch die zweite Heizplatte und sind mit einer endseitigen Mutter festgelegt. Die Löcher in den Materialrohren 21, 22, 23, 24, 25, 26, 27, 28, 29 haben wenigstens in einer Richtung eine größere Breite als die Schraube in diesem Bereich dick ist. Auf diese Weise entsteht eine schwimmende Lagerung zwischen den Heizplatten und den Materialrohren 21, 22, 23, 24, 25, 26, 27, 28, 29.

Auf der Außenseite der Heizplatten ist jeweils eine Ausnehmung 92, insbesondere eine Nut, ausgebildet, in welcher eine Heizwendel 93 mit Anschlusskabeln eingelegt ist. Der Hauptbestandteil der Heizplatten besteht aus chemisch vernickeltem Messing.

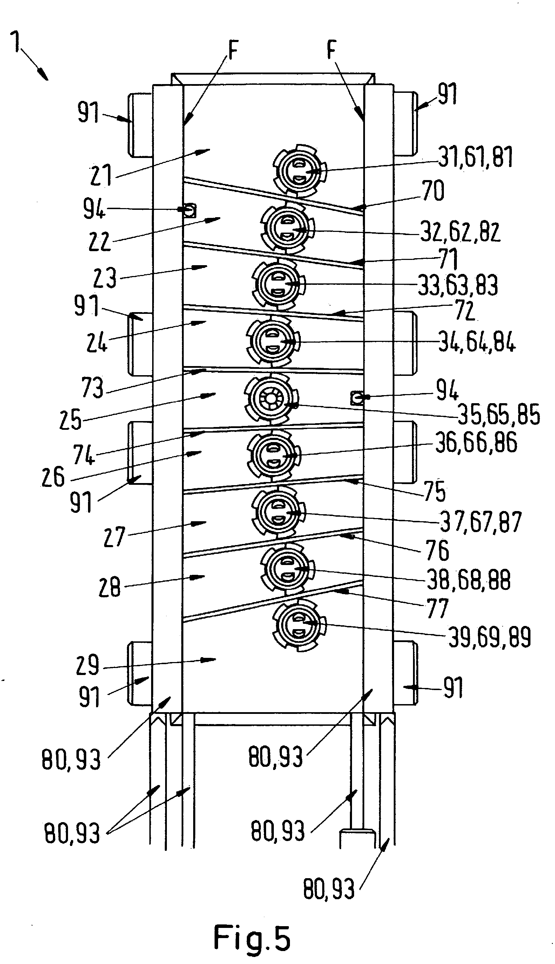

In Fig. 5 ist eine perspektivische Ansicht der in den Fig. 2 und 3 dargestellten Komponente 1 aus Richtung der freien Enden 61, 62, 63, 64, 65, 66, 67, 68, 69 der Materialrohre 21, 22, 23, 24, 25, 26, 27, 28, 29 dargestellt. Zur Erhöhung der Kenntlichkeit ist der Verteiler inklusive der ersten Verteilerplatte 10 im Hintergrund nicht dargestellt.

Gut zu erkennen ist in Fig. 5, dass die Strömungskanäle 31, 32, 33, 34, 35, 36, 37, 38, 39 an den freien Enden 61, 62, 63, 64, 65, 66, 67, 68, 69 der Materialrohre 21, 22, 23, 24, 25, 26, 27, 28, 29 jeweils in ein Düsenmundstück 81, 82, 83, 84, 85, 86, 87, 88, 89 münden. Letztere sind in die Strömungskanäle 31, 32, 33, 34, 35, 36, 37, 38, 39 eingesetzt.

Ferner ist gut zu sehen, dass die Kontaktflächen F zwischen den Heizplatten 80 und den Materialrohren 21, 22, 23, 24, 25, 26, 27, 28, 29 parallel zueinander verläuft. Gleichzeitig liegen die Strömungskanäle 31, 32, 33, 34, 35, 36, 37, 38, 39 der Materialrohre 21, 22, 23, 24, 25, 26, 27, 28, 29 jedoch in Reihe benachbart zueinander auf einer gekrümmten Linie.

Weiterhin erkennt man die Spalte 70, 71, 72, 73, 74, 75, 76, 77 zwischen den einzelnen Materialrohren 21, 22, 23, 24, 25, 26, 27, 28, 29, insbesondere zwischen deren freien Enden 61,62,63,64,65,66,67,68,69.

Die Anordnung der Befestigungsmittel 91 entspricht der Beschreibung zu den Fig. 2 und 3.

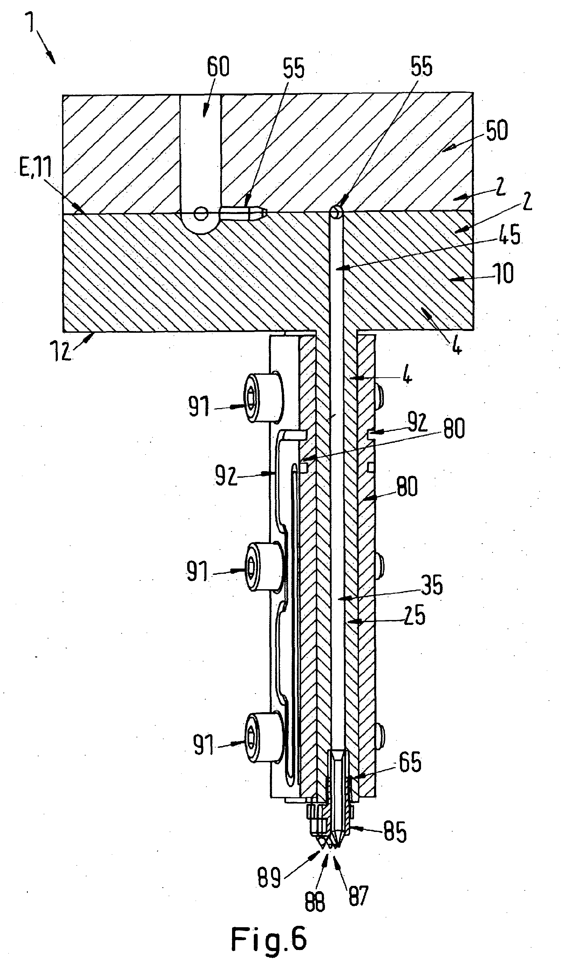

Fig. 6 ist ein Längsschnitt durch die in den Fig. 2 und 3 dargestellte Komponente entnehmbar. Insbesondere verläuft der Schnitt durch den fünften Strömungskanal 35 des fünften Materialrohrs 25. Die Ausgestaltung der Heizvorrichtung 80 mit als Heizplatten ausgebildeten Heizelementen, die durch Schrauben an den Materialrohren festgelegt sind, entspricht der Beschreibung zu den Fig. 2, 3 und 5. Gut erkennt man in diesem Zusammenhang die Ausnehmungen 92 auf der Außenseite der Heizplatten in Form von Nuten.

Der Längsschnitt veranschaulicht sehr gut die Ausbildung der Materialrohre 21, 22, 23, 24, 25, 26, 27, 28, 29 gemeinsam mit der ersten Verteilerplatte 10 in Form eines Monolithen 4. Es besteht mithin kein Materialwechsel und auch keine Fügestelle zwischen der Unterseite 12 der ersten Verteilerplatte 10 und dem fünften Materialrohr 25. Auch die lineare sowie koaxiale Ausbildung des fünften Strömungskanals 35 und des fünften Speisekanals 45 wird deutlich gezeigt.

Am freien Ende 65 des fünften Materialrohrs 25 ist ein fünftes Düsenmundstück 85 eingesetzt. In dessen Flucht erkennt man die Spitzen des siebten, achten und neunten Düsenmundstücks 87, 88,89. Das sechste Düsenmundstück wird vom fünften verdeckt.

In der oberen Bildhälfte findet sich der Verteiler 2 wieder. Hier erkennt man insbesondere die Ausgestaltung der Verteilerkanäle, insbesondere des fünften Verteilerkanals 55, in der Trennebene E zwischen der ersten und zweiten Verteilerplatte 10, 50. Dieser fünfte Verteilerkanal 55 ist durch gegenüberliegende Nuten in der Oberseite 11 der ersten Verteilerplatte 10 und in der zweiten Verteilerplatte 50 ausgebildet. Er verbindet den fünften Speisekanal 45 mit einer Einspeiseöffnung 60, welche durch die zweite Verteilerplatte 60 hindurchführt.

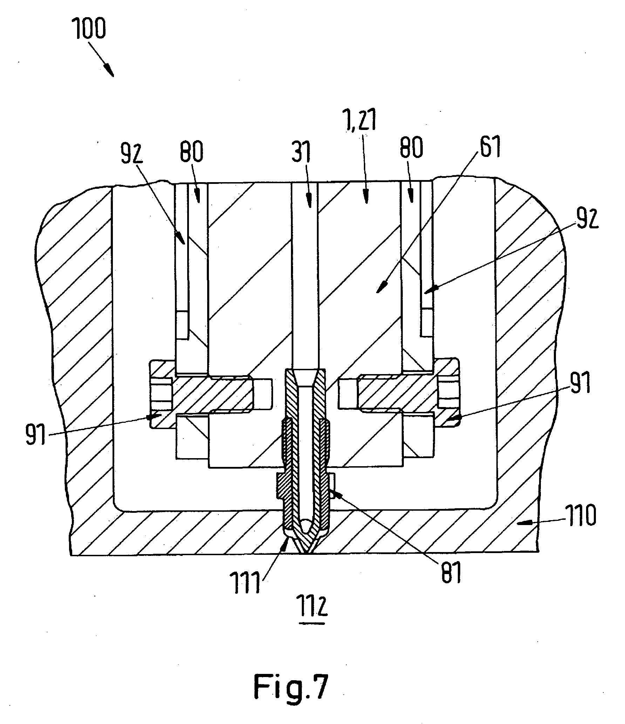

Fig. 7 zeigt einen Ausschnitt eines Längsschnittes durch ein Spritzgießwerkzeug 100 umfassend eine Komponente wie in den Fig. 2 und 3 dargestellt und vorstehend beschrieben. Insbesondere ist ein freies Ende 61 eines ersten Materialrohrs 21 zu sehen. An diesem ist zunächst eine Heizvorrichtung 80 mit Hilfe von Befestigungsmitteln 91, insbesondere Schrauben, festgelegt. Die Heizvorrichtung 80 umfasst zwei gegenüberliegende Heizplatten, zwischen denen das erste Materialrohr 21 angeordnet ist. Auf der Außenseite der Heizplatten sind Ausnehmungen 92 zur Aufnahme einer Heizwendel ausgebildet.

Mit dem freien Ende 61 taucht das erste Materialrohr 21 in eine Formplatte 110 ein. Ein in den ersten Strömungskanal 31 eingesetztes erstes Düsenmundstück 81 sitzt mit seinem vorstehenden Ende in einer Angussöffnung 110, welche sich in der Formplatte 110 befindet. Die Angussöffnung 111 mündet in ein angedeutetes Formnest 112.

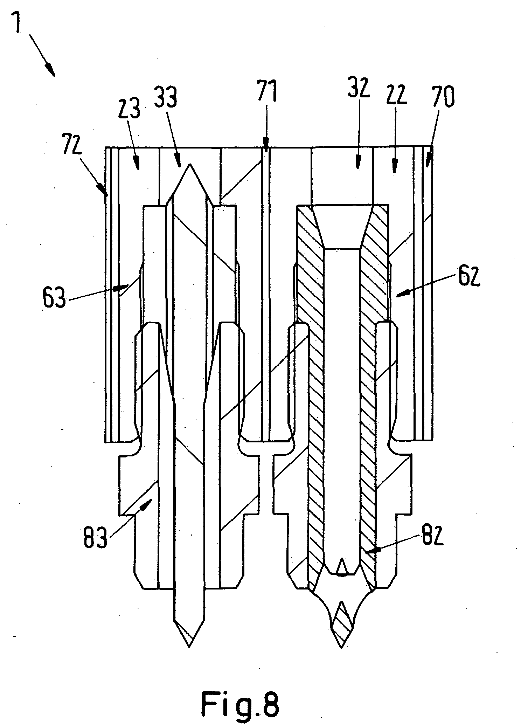

Fig. 8 zeigt einen Ausschnitt eines Längsschnittes durch die in den Fig. 2 und 3 dargestellte Komponente 1, wobei zwei unterschiedliche Düsenmundstücke 82, 83 in die Strömungskanäle 32, 33zwei benachbarte Materialrohre 22, 23 eingesetzt sind. Das linke Düsenmundstück 83 verfügt über einen sogenannten Torpedo, welcher als zentral sowie koaxial im Düsenmundstück angeordneter Strömungskörper fungiert. Das rechte Düsenmundstück 82 hat hingegen endseitig radial verteilte Austrittsöffnungen und eine Düsenspitze.

Die Düsenmundstücke 82, 83 sind jeweils zweiteilig ausgebildet. Ein äußerer Dichtring ist jeweils über ein inneres Strömungselement geworfen und in den jeweiligen Strömungskanal 32, 33 eingeschraubt.

Die Ausgestaltung gemäß Fig. 9 entspricht mit im Folgenden beschriebenen Ausnahmen, der Ausführung gemäß Fig. 5. Abweichend liegen jedoch gekrümmte Kontaktflächen F zwischen der zweiten Heizvorrichtung 80 und den Materialrohren 21, 22, 23, 24, 25, 26, 27, 28, 29 vor. Der Abstand zwischen den Strömungskanälen 31, 32, 33, 34, 35, 36, 37, 38, 39 der Materialrohre 21, 22, 23, 24, 25, 26, 27, 28, 29 und den Kontaktflächen F ist so weitestgehend konstant.

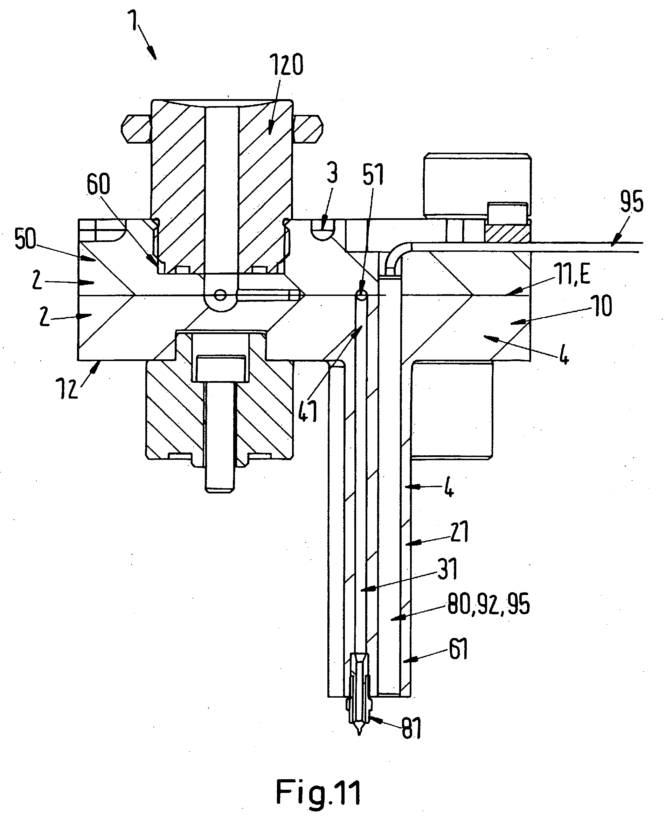

In Fig. 10 findet sich eine perspektivische Ansicht einer Komponente 1 für ein Spritzgießwerkzeug, die eine leicht modifizierte Komponente 1 gemäß Fig. 1 umfasst. Fig. 11 enthält einen Längsschnitt durch die in Fig. 10 dargestellte Komponente.

Hinsichtlich der Ausgestaltung der zweiten Heizvorrichtung 80 unterscheidet sich die Ausführung nach den Fig. 10 und 11 von denjenigen der Fig. 2 bis 7 und 9. Nunmehr werden insbesondere Heizpatronen 95 eingesetzt. Zur Aufnahme jeweils einer Heizpatrone 95 ist es notwendig, in jedes Materialrohr 21, 22, 23, 24, 25, 26, 27, 28, 29 eine parallel zum Strömungskanal 31, 32, 33, 34, 35, 36, 37, 38, 39 verlaufende Ausnehmung 92 einzubringen. Hier insbesondere Bohrungen. Jede Ausnehmung 92 ist am freien Ende 61, 62, 63, 64, 65, 66, 67, 68, 69 des jeweiligen Materialrohrs 21, 22, 23, 24, 25, 26, 27, 28, 29 offen ausgebildet. Gegenüberliegend führen die Ausnehmungen 92 durch die erste und zweite Verteilerplatte 10 hindurch, sodass die Heizpatronen 95 bequem von oben in die Ausnehmungen 92 eingeschoben werden können. Die zweite Verteilerplatte 50 hat in diesem Bereich einen vertieften Absatz. Die Anschlussleitungen der Heizpatronen 95 sind oberhalb der ersten Verteilerplatte 10 im Wesentlichen rechtwinklig umgeknickt und nach außen von den Verteilerplatten 10, 50 weggeführt. Hierdurch können die Heizpatronen 95 nicht tiefer in die Ausnehmungen 92 hineinrutschen. Zur Vermeidung von Kabelverwicklungen und einem Herausrutschen der Heizpatronen 95 aus den Ausnehmungen 92 liegt ein Niederhalter 96 auf den abgewinkelten Anschlusskabeln. Der Niederhalter 96 ist an der zweiten Verteilerplatte 50 fixiert.

Ferner zeichnet sich die Ausgestaltung nach den Fig. 10 und 11 durch eine erste Heizvorrichtung 3 zur Beheizung des Verteilers 2 aus. Diese verfügt über eine außenseitige Ausnehmung in der zweiten Verteilerplatte 50, insbesondere eine Nut, in welche eine Heizwendel einlegbar ist.

Auf der Oberseite der zweiten Verteilerplatte 50 ist weiterhin eine Maschinendüse 120 dargestellt, welche in die Einlassöffnung 60 in der zweiten Verteilerplatte 50 mündet. Insbesondere taucht die Maschinendüse 120 in die Einlassöffnung ein.

Vor allem Fig. 11 ist explizit zu entnehmen, wie die Ausnehmung 92 zur Aufnahme einer Heizpatrone 95 parallel zu einem ersten Strömungskanal 31 in ein erstes Materialrohr 21, die erste Verteilerplatte 10 und die zweite Verteilerplatte 50 eingebracht ist. Zudem sind wie in Fig. 6 erkennbar, auch hier die in der Trennebene E liegenden Verteilerkanäle, insbesondere der erste Verteilerkanal 51, durch Nuten in der Oberseite 11 der ersten Verteilerplatte 10 und der zweiten Verteilerplatte 50 ausgebildet.

Bezüglich der Maschinendüse 120 ist Fig. 11 zu entnehmen, dass diese in die Einlassöffnung 60 eingeschraubt ist.

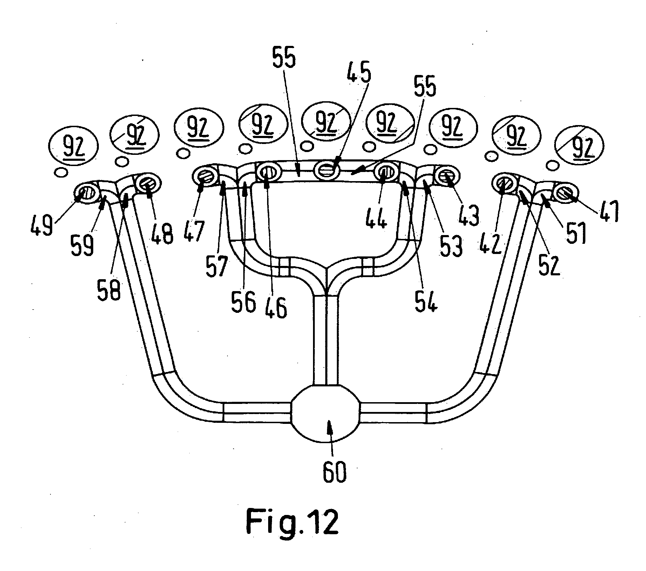

Fig. 12 ist eine Ansicht der Oberseite 11 der ersten Verteilerplatte 10 gemäß Fig. 10 zu entnehmen und gewissermaßen das äquivalent zu Fig. 4. Es werden die in die Oberseite 11 der ersten Verteilerplatte 10 eingebrachten Verteiler- 51, 52, 53, 54, 55, 56, 57, 58, 59 und Speisekanäle 41, 42,43,44, 45, 46, 47, 48, 49 gezeigt. Die Verteilerkanäle 51, 52, 53, 54, 55, 56, 57, 58, 59 verbinden eine zentrale Einlassöffnung 60 mit den Speisekanälen 41, 42, 43, 44, 45, 46, 47, 48, 49.

Weiterhin liegen die Speisekanäle 41, 42, 43, 44, 45, 46, 47, 48, 49 benachbart zueinander auf einer gekrümmten Linie, insbesondere mit konstantem Radius. Auf einer parallel verlaufenden zusätzlichen Linie, insbesondere mit größerem Radius, finden sich Ausnehmungen 92 zur Aufnahme von Heizpatronen.

Die Erfindung ist nicht auf eine der vorbeschriebenen Ausführungsformen beschränkt, sondern in vielfältiger Weise abwandelbar.

Insbesondere kann sich die zweite Heizvorrichtung auch aus mehreren der gezeigten Heizelemente zusammensetzen, nämlich aus Heizelementen und/oder Heizplatte und/oder und/oder Heizpatrone.

Außerdem kann eine erste Heizvorrichtung bei allen Ausführungsbeispielen ergänzt sein. Diese kann jeweils mit der ersten und/oder der zweiten Verteilerplatte in Kontakt stehen.

Eine weitere alternative Abwandlung kann daraus hervorgehen, dass die Verteilerkanäle, bzw. die hierfür vorgesehenen Nuten nur in einer der beiden verteilerplatten eingebracht sind, nämlich entweder nur in der ersten oder nur in der zweiten Verteilerplatte.

Ferner ist es nicht zwingend erforderlich, dass die Materialrohre dieselbe Länge aufweisen, Die Länge kann entsprechend der Position der Angusspunkte variieren.

### Bezugszeichenliste

| | | | |
|---|---|---|---|
| 1 | Komponente | 44 | vierter Speisekanal |
| | | 45 | fünfter Speisekanal |
| 2 | Verteiler | 46 | sechster Speisekanal |
| 3 | erste Heizvorrichtung | 47 | siebter Speisekanal |
| 4 | Monolith | 48 | achter Speisekanal |
| | | 49 | neunter Speisekanal |
| 10 | erste Verteilerplatte | | |
| 11 | Oberseite | 50 | zweite Verteilerplatte |
| 12 | Unterseite | | |
| | | 51 | erster Verteilerkanal |
| 21 | erstes Materialrohr | 52 | zweiter Verteilerkanal |
| 22 | zweites Materialrohr | 53 | dritter Verteilerkanal |
| 23 | drittes Materialrohr | 54 | vierter Verteilerkanal |
| 24 | viertes Materialrohr | 55 | fünfter Verteilerkanal |
| 25 | fünftes Materialrohr | 56 | sechster Verteilerkanal |
| 26 | sechstes Materialrohr | 57 | siebter Verteilerkanal |
| 27 | siebtes Materialrohr | 58 | achter Verteilerkanal |
| 28 | achtes Materialrohr | 59 | neunter Verteilerkanal |
| 29 | neuntes Materialrohr | | |
| | | 60 | Einlassöffnung |
| 31 | erster Strömungskanal | | |
| 32 | zweiter Strömungskanal | 61 | erstes freies Ende |
| 33 | dritter Strömungskanal | 62 | zweites freies Ende |
| 34 | vierter Strömungskanal | 63 | drittes freies Ende |
| 35 | fünfter Strömungskanal | 64 | viertes freies Ende |
| 36 | sechster Strömungskanal | 65 | fünftes freies Ende |
| 37 | siebter Strömungskanal | 66 | sechstes freies Ende |
| 38 | achter Strömungskanal | 67 | siebtes freies Ende |
| 39 | neunter Strömungskanal | 68 | achtes freies Ende |
| | | 69 | neuntes freies Ende |
| 41 | erster Speisekanal | | |
| 42 | zweiter Speisekanal | 70 | erster Spalt |
| 43 | dritter Speisekanal | 71 | zweiter Spalt |
| 72 | dritter Spalt | | |
| 73 | vierter Spalt | 91 | Befestigungsmittel |
| 74 | fünfter Spalt | 92 | Ausnehmung (für zweite |
| 75 | sechster Spalt | | Heizvorrichtung) |
| 76 | siebter Spalt | 93 | Heizwendeln mit Anschlüssen |
| 77 | achter Spalt | 94 | Thermofühler |
| | | 95 | Heizpatrone mit Anschlusskabel |
| 80 | zweite Heizvorrichtung | 96 | Niederhalter |
| | | | |
| 81 | erstes Düsenmundstück | 100 | Spritzgießwerkzeug |
| 82 | zweites Düsenmundstück | 110 | Formplatte |
| 83 | drittes Düsenmundstück | 111 | Angussöffnungen |
| 84 | viertes Düsenmundstück | 112 | Formnest |
| 85 | fünftes Düsenmundstück | 120 | zentrale Maschinendüse |
| 86 | sechstes Düsenmundstück | | |
| 87 | siebtes Düsenmundstück | E | Trennebene |
| 88 | achtes Düsenmundstück | F | Kontaktfläche |
| 89 | neuntes Düsenmundstück | | |

## Patentansprüche

1. **Komponente** (1) für ein Spritzgießwerkzeug (100),
a) mit einem Verteiler (2), der eine erste Verteilerplatte (10) aufweist, die eine Oberseite (11) und eine Unterseite (12) hat,
b) mit wenigstens zwei Materialrohren (21, 22, 23, 24, 25, 26, 27, 28, 29), die quer zur Unterseite (12) der ersten Verteilerplatte (10) ausgerichtet und auf der Unterseite (12) mit der ersten Verteilerplatte (10) verbunden sind,
c) wobei in jedem Materialrohr (21, 22, 23, 24, 25, 26, 27, 28, 29) ein Strömungskanal (31, 32, 33, 34, 35, 36, 37, 38, 39) ausgebildet ist, und
d) wobei in der ersten Verteilerplatte (10) Speisekanäle (41, 42, 43, 44, 45, 46, 47, 48, 49) ausgebildet sind, die auf der Unterseite (12) in die Strömungskanäle (31, 32, 33, 34, 35, 36, 37, 38, 39) der Materialrohre (21, 22, 23, 24, 25, 26, 27, 28, 29) münden,
e) wobei die Speisekanäle (41, 42, 43, 44, 45, 46, 47, 48, 49) auf der Oberseite (11) der ersten Verteilerplatte (10) offen ausgebildet sind, und
f) wobei die erste Verteilerplatte (10) gemeinsam mit den Materialrohren (21, 22, 23, 24, 25, 26, 27, 28, 29) monolithisch ausgebildet ist,
g) wobei benachbarte Materialrohre (21, 22, 23, 24, 25, 26, 27, 28, 29) wenigstens an ihren freien Enden (61, 62, 63, 64, 65, 66, 67, 68, 69) um einen Spalt (70, 71, 72, 73, 74, 75, 76, 77) voneinander beabstandet sind,
**dadurch gekennzeichnet, dass**
der Spalt (70, 71, 72, 73, 74, 75, 76, 77) kleiner als 2 mm und ein Laserschnitt, ein Drahtschnitt oder eine Erosion ist.

2. Komponente (1) für ein Spritzgießwerkzeug (100) nach Anspruch 1, **dadurch gekennzeichnet, dass** der Verteiler (2) eine zweite Verteilerplatte (50) aufweist, die an der Oberseite (11) der ersten Verteilerplatte (10) anliegt, wobei in der Trennebene (E) zwischen der ersten und der zweiten Verteilerplatte (10, 50) Verteilerkanäle (51, 52, 53, 54, 55, 56, 57, 58, 59) ausgebildet sind, welche eine Einlassöffnung (60) mit den Speisekanälen (41, 42, 43, 44, 45, 46, 47, 48, 49) in der ersten Verteilerplatte (10) strömungsverbinden.

3. Komponente (1) für ein Spritzgießwerkzeug (100) nach Anspruch 2, **dadurch gekennzeichnet, dass** die Verteilerkanäle (51, 52, 53, 54, 55, 56, 57, 58, 59) durch Nuten in der ersten Verteilerplatte (10) und/oder in der zweiten Verteilerplatte (50) ausgebildet sind.

4. Komponente (1) für ein Spritzgießwerkzeug (100) nach einem der vorhergehenden Ansprüche, **dadurch gekennzeichnet, dass** der Verteiler (2) eine erste Heizvorrichtung (3) aufweist.

5. Komponente (1) für ein Spritzgießwerkzeug (100) nach einem der vorhergehenden Ansprüche, **dadurch gekennzeichnet, dass** je ein Speisekanal (41, 42, 43, 44, 45, 46, 47, 48, 49) in je einen Strömungskanal (31, 32, 33, 34, 35, 36, 37, 38, 39) mündet.

6. Komponente (1) für ein Spritzgießwerkzeug (100) nach einem der vorhergehenden Ansprüche, **dadurch gekennzeichnet, dass** den Materialrohren (21, 22, 23, 24, 25, 26, 27, 28, 29) eine zweite Heizvorrichtung (80) zugeordnet ist.

7. Komponente (1) für ein Spritzgießwerkzeug (100) nach Anspruch 6, **dadurch gekennzeichnet, dass** die zweite Heizvorrichtung (80) ein Heizelement (80) aufweist, das berührend mit wenigstens zwei Materialrohren (21, 22, 23, 24, 25, 26, 27, 28, 29) thermisch gekoppelt ist.

8. Komponente (1) für ein Spritzgießwerkzeug (100) nach einem der Ansprüche 6 oder 7, **dadurch gekennzeichnet, dass** das Heizelement (80) wenigstens eine Heizpatrone (95) aufweist, die in eine parallel zum Strömungskanal (31, 32, 33, 34, 35, 36, 37, 38, 39) eines Materialrohrs (21, 22, 23, 24, 25, 26, 27, 28, 29) ausgebildete Ausnehmung (92) in einem Materialrohr (21, 22, 23, 24, 25, 26, 27, 28, 29) eingesetzt ist.

9. Komponente (1) für ein Spritzgießwerkzeug (100) nach Anspruch 8, **dadurch gekennzeichnet, dass** sich die Ausnehmung (92) für die Heizpatrone (95) durch die erste Verteilerplatte (10) hindurch fortsetzt, wobei das Anschlusskabel der Heizpatrone (95) außerhalb der ersten Verteilerplatte (10) und außerhalb des Materialrohrs (21, 22, 23, 24, 25, 26, 27, 28, 29) angeordnet ist.

10. Komponente (1) für ein Spritzgießwerkzeug (100) nach einem der vorhergehenden Ansprüche, **dadurch gekennzeichnet, dass** die Strömungskanäle (31, 32, 33, 34, 35, 36, 37, 38, 39) an den freien Enden (61, 62, 63, 64, 65, 66, 67, 68, 69) der Materialrohre (21, 22, 23, 24, 25, 26, 27, 28, 29) jeweils in ein Düsenmundstück (81, 82, 83, 84, 85, 86, 87, 88, 89) münden.

11. Spritzgießwerkzeug (100) mit einer Komponente (1) nach einem der Ansprüche 1 bis 10, wobei die Strömungskanäle (31, 32, 33, 34, 35, 36, 37, 38, 39) der Materialrohre (21, 22, 23, 24, 25, 26, 27, 28, 29) an deren freien Enden (61, 62, 63, 64, 65, 66, 67, 68, 69) mit Angussöffnungen (111) einer Formplatte (110) strömungsverbunden sind, wobei die Angussöffnungen (111) in wenigstens ein Formnest (112) in der Formplatte (110) münden.

12. Verfahren zur Herstellung einer Komponente (1) für ein Spritzgießwerkzeug (100) nach einem der Ansprüche 1 bis 10 umfassend die Schritte:
a) Herausarbeiten einer ersten Verteilerplatte (10) eines Verteilers (2) mit einer Oberseite (11) und einer Unterseite (12) sowie wenigstens zwei Materialrohren (21, 22, 23, 24, 25, 26, 27, 28, 29), die quer zur Unterseite (12) der ersten Verteilerplatte (10) ausgerichtet und auf der Unterseite (12) mit der ersten Verteilerplatte (10) verbunden sind, aus einem monolithischen Materialblock, wobei benachbarte Materialrohre (21, 22, 23, 24, 25, 26, 27, 28, 29) wenigstens an ihren freien Enden (61, 62, 63, 64, 65, 66, 67, 68, 69) um einen Spalt (70, 71, 72, 73, 74, 75, 76, 77) voneinander beabstandet sind, und wobei der Spalt (70, 71, 72, 73, 74, 75, 76, 77) kleiner als 2 mm und ein Laserschnitt, ein Drahtschnitt oder eine Erosion ist,
b) Einbringen eines Strömungskanals (31, 32, 33, 34, 35, 36, 37, 38, 39) in jedes Materialrohr (21, 22, 23, 24, 25, 26, 27, 28, 29),
c) Einbringen von Speisekanälen (41, 42, 43, 44, 45, 46, 47, 48, 49) in die erste Verteilerplatte (10), die auf der Unterseite (12) der ersten Verteilerplatte (10) in die Strömungskanäle (31, 32, 33, 34, 35, 36, 37, 38, 39) der Materialrohre (21, 22, 23, 24, 25, 26, 27, 28, 29) münden, und die auf der Oberseite (11) offen ausgebildet sind.

## Claims

1. Component (1) for an injection moulding unit (100),
a) with a manifold (2) that has a first manifold plate (10) with a top side (11) and a bottom side (12),
b) with at least two material pipes (21, 22, 23, 24, 25, 26, 27, 28, 29) that are arranged transverse to the bottom side (12) of the first manifold plate (10) and are connected to the first manifold plate (10) at the bottom side (12),
c) whereby a flow channel (31, 32, 33, 34, 35, 36, 37, 38, 39) is formed in each material pipe (21, 22, 23, 24, 25, 26, 27, 28, 29) and
d) whereby feed channels (41, 42, 43, 44, 45, 46, 47, 48, 49) are formed in the first manifold plate (10), which mouth with the flow channels (31, 32, 33, 34, 35, 36, 37, 38, 39) of the material pipes (21, 22, 23, 24, 25, 26, 27, 28, 29) on the bottom side (12) of the first manifold plate (10),
e) whereby the feed channels (41, 42, 43, 44, 45, 46, 47, 48, 49) on the top side (11) of the first manifold plate (10) are open,
f) whereby the first manifold plate (10) is monolithically formed together with the material pipes (21, 22, 23, 24, 25, 26, 27, 28, 29), and
g) whereby adjacent material pipes (21, 22, 23, 24, 25, 26, 27, 28, 29) are spaced apart from each other at least at their free ends (61, 62, 63, 64, 65, 66, 67, 68, 69) by a gap (70, 71, 72, 73, 74, 75, 76, 77),
**characterized in that**
the gap (70, 71, 72, 73, 74, 75, 76, 77) is smaller than 2 mm and is a laser cut, a wire cut or an erosion.

2. Component (1) for an injection moulding unit (100) according to claim 1, **characterised in that** the manifold (2) has a second manifold plate (50) that lies on the top side (11) of the first manifold plate (10), whereby distribution channels (51, 52, 53, 54, 55, 56, 57, 58, 59) are formed between the first and second manifold plate (10, 50) in a parting plane (E) and which connect an inlet opening (60) in fluid communication with the feed channels (41, 42, 43, 44, 45, 46, 47, 48, 49) in the first manifold plate (10).

3. Component (1) for an injection moulding unit (100) according to claim 2, **characterised in that** the distribution channels (51, 52, 53, 54, 55, 56, 57, 58, 59) are formed by grooves in the first manifold plate (10) and/or in the second manifold plate (50).

4. Component (1) for an injection moulding unit (100) according to one of the previous claims **characterised in that** the manifold (2) has a first heating device (3).

5. Component (1) for an injection moulding unit (100) according to one of the previous claims **characterised in that** each feed channel (41, 42, 43, 44, 45, 46, 47, 48, 49) mouths into a flow channel (31, 32, 33, 34, 35, 36, 37, 38, 39).

6. Component (1) for an injection moulding unit (100) according to one of the previous claims **characterised in that** a second heating device (80) is assigned to the material pipes (21, 22, 23, 24, 25, 26, 27, 28, 29).

7. Component (1) for an injection moulding unit (100) according to claim 6 **characterised in that** the second heating device (80) has a heating element (80) that contacts and is thermally coupled to at least two material pipes (21, 22, 23, 24, 25, 26, 27, 28, 29).

8. Component (1) for an injection moulding unit (100) according to one of the claims 6 or 7 **characterised in that** the heating element (80) has at least one heating cartridge (95) that is inserted into a recess (92) in a material pipe (21, 22, 23, 24, 25, 26, 27, 28, 29), said recess (92) being formed parallel to the flow channel (31, 32, 33, 34, 35, 36, 37, 38, 39) of a material pipe (21, 22, 23, 24, 25, 26, 27, 28, 29).

9. Component (1) for an injection moulding unit (100) according to claim 8, **characterised in that** the recess (92) for the heating cartridge (95) continues through the first manifold plate (10), whereby the connection cable of the heating cartridge (95) is located exterior to the first manifold plate (10) and exterior to the material pipe (21, 22, 23, 24, 25, 26, 27, 28, 29).

10. Component (1) for an injection moulding unit (100) according to one of the previous claims **characterised in that** the flow channels (31, 32, 33, 34, 35, 36, 37, 38, 39) each mouth into a nozzle tip (81, 82, 83, 84, 85, 86, 87, 88, 89) at the free ends (61, 62, 63, 64, 65, 66, 67, 68, 69) of the material pipes (21, 22, 23, 24, 25, 26, 27, 28, 29).

11. Injection moulding unit (100) with a component (1) according to one of the claims 1 to 10, whereby the flow channels (31, 32, 33, 34, 35, 36, 37, 38, 39) of the material pipes (21, 22, 23, 24, 25, 26, 27, 28, 29) at their free ends (61, 62, 63, 64, 65, 66, 67, 68, 69) connect the flow to the sprue openings (111) of a mould plate (110), whereby the sprue openings (111) connect with at least one mould cavity (112) in the mould plate (110).

12. Method for manufacturing a component (1) for an injection moulding unit (100) according to one of the claims 1 to 10 including the following steps:
a) fashioning a first manifold plate (10) of a manifold (2) with a top side (11) and a bottom side (12) as well as at least two material pipes (21, 22, 23, 24, 25, 26, 27, 28, 29) that are arranged transversely to the bottom side (12) of the first manifold plate (10) and are connected to the first manifold plate (10) at the bottom side (12), consisting of a monolithic material block; whereby adjacent material pipes (21, 22, 23, 24, 25, 26, 27, 28, 29) are spaced away from each other by a gap (70, 71, 72, 73, 74, 75, 76, 77) at least at their free ends (61,62, 63, 64, 65, 66, 67, 68, 69) and whereby the gap (70, 71,72, 73, 74, 75, 76, 77) is smaller than 2 mm and is a laser cut, a wire cut or an erosion,
b) bringing a flow channel (31, 32, 33, 34, 35, 36, 37, 38, 39) into each material pipe (21, 22, 23, 24, 25, 26, 27, 28, 29),
c) bringing feed channels (41,42, 43, 44, 45, 46, 47, 48, 49) into the first manifold plate (10), which connect with the flow channels (31, 32, 33, 34, 35, 36, 37, 38, 39) of the material pipes (21, 22, 23, 24, 25, 26, 27, 28, 29) at the bottom side (12) of the first manifold plate (10) and which are open at the top side (11).

## Revendications

1. Composant (1) pour un outil de moulage par injection (100),
a) avec un distributeur (2), qui comporte une première plaque de distributeur (10) qui a un dessus (11) et un dessous (12),
b) avec au moins deux tubes de matière (21, 22, 23, 24, 25, 26, 27, 28, 29), qui sont orientés transversalement par rapport au dessous (12) de la première plaque de distributeur (10) et qui sont reliés sur le dessous (12) à la première plaque de distributeur (10),
c) un canal d'écoulement (31, 32, 33, 34, 35, 36, 37, 38, 39) étant conçu dans chaque tube de matière (21, 22, 23, 24, 25, 26, 27, 28, 29),
d) des canaux d'alimentation (41, 42, 43, 44, 45, 46, 47, 48, 49) étant conçus dans la première plaque de distributeur (10), lesquels canaux d'alimentation débouchent sur le dessous (12) dans les canaux d'écoulement (31, 32, 33, 34, 35, 36, 37, 38, 39) des tubes de matière (21, 22, 23, 24, 25, 26, 27, 28, 29),
e) les canaux d'alimentation (41, 42, 43, 44, 45, 46, 47, 48, 49) étant conçus ouverts sur le dessus (11) de la première plaque de distributeur (10), et
f) la première plaque de distributeur (10) étant conçue d'un seul bloc avec les tubes de matière (21, 22, 23, 24, 25, 26, 27, 28, 29),
g) des tubes de matière (21, 22, 23, 24, 25, 26, 27, 28, 29) voisins étant à une certaine distance les uns des autres, distance correspondant à une fente (70, 71, 72, 73, 74, 75, 76, 77), au moins au niveau de leurs extrémités libres (61, 62, 63, 64, 65, 66, 67, 68, 69),
**caractérisé en ce que** la fente (70, 71, 72, 73, 74, 75, 76, 77) est inférieure à 2 mm et est une découpe au laser, une découpe au fil ou une érosion.

2. Composant (1) pour un outil de moulage par injection (100) selon la revendication 1, **caractérisé en ce que** le distributeur (2) comporte une deuxième plaque de distributeur (50) qui s'appuie contre le dessus (11) de la première plaque de distributeur (10), des canaux de distributeur (51, 52, 53, 54, 55, 56, 57, 58, 59) étant conçus dans le plan de séparation (E) entre la première et la deuxième plaque de distributeur (10, 50), lesquels canaux de distributeur relient, pour les flux, un orifice d'admission (60) aux canaux d'alimentation (41, 42, 43, 44, 45, 46, 47, 48, 49) dans la première plaque de distributeur (10).

3. Composant (1) pour un outil de moulage par injection (100) selon la revendication 2, **caractérisé en ce que** les canaux de distributeur (51, 52, 53, 54, 55, 56, 57, 58, 59) sont formés par des rainures dans la première plaque de distributeur (10) et/ou dans la deuxième plaque de distributeur (50).

4. Composant (1) pour un outil de moulage par injection (100) selon l'une des revendications précédentes, **caractérisé en ce que** le distributeur (2) comporte un premier dispositif de chauffage (3).

5. Composant (1) pour un outil de moulage par injection (100) selon l'une des revendications précédentes, **caractérisé en ce que**, à chaque fois, un canal d'alimentation (41, 42, 43, 44, 45, 46, 47, 48, 49) débouche dans un canal d'écoulement (31, 32, 33, 34, 35, 36, 37, 38, 39).

6. Composant (1) pour un outil de moulage par injection (100) selon l'une des revendications précédentes, **caractérisé en ce qu'**un deuxième dispositif de chauffage (80) est associé aux tubes de matière (21, 22, 23, 24, 25, 26, 27, 28, 29).

7. Composant (1) pour un outil de moulage par injection (100) selon la revendication 6, **caractérisé en ce que** le deuxième dispositif de chauffage (80) comporte un élément chauffant (80) qui est couplé thermiquement, par contact, à au moins deux tubes de matière (21, 22, 23, 24, 25, 26, 27, 28, 29).

8. Composant (1) pour un outil de moulage par injection (100) selon l'une des revendications 6 ou 7, **caractérisé en ce que** l'élément chauffant (80) comporte au moins une cartouche chauffante (95) qui est placée dans un évidement (92) dans un tube de matière (21, 22, 23, 24, 25, 26, 27, 28, 29), évidement conçu parallèlement au canal d'écoulement (31, 32, 33, 34, 35, 36, 37, 38, 39) d'un tube de matière (21, 22, 23, 24, 25, 26, 27, 28, 29).

9. Composant (1) pour un outil de moulage par injection (100) selon la revendication 8, **caractérisé en ce que** l'évidement (92) pour la cartouche chauffante (95) se prolonge à travers la première plaque de distributeur (10), le câble de raccordement de la cartouche chauffante (95) étant agencé en dehors de la première plaque de distributeur (10) et en dehors du tube de matière (21, 22, 23, 24, 25, 26, 27, 28, 29).

10. Composant (1) pour un outil de moulage par injection (100) selon l'une des revendications précédentes, **caractérisé en ce que** les canaux d'écoulement (31, 32, 33, 34, 35, 36, 37, 38, 39) débouchent, au niveau des extrémités libres (61, 62, 63, 64, 65, 66, 67, 68, 69) des tubes de matière (21, 22, 23, 24, 25, 26, 27, 28, 29), à chaque fois dans un nez de buse (81, 82, 83, 84, 85, 86, 87, 88, 89).

11. Composant (1) pour un outil de moulage par injection (100) selon l'une des revendications 1 à 10, les canaux d'écoulement (31, 32, 33, 34, 35, 36, 37, 38, 39) des tubes de matière (21, 22, 23, 24, 25, 26, 27, 28, 29) étant reliés au niveau de leurs extrémités libres (61, 62, 63, 64, 65, 66, 67, 68, 69), pour les flux, à des orifices d'injection (111) d'une plaque de moulage (110), les orifices d'injection (111) débouchant dans au moins une cavité de moulage (112) dans la plaque de moulage (110).

12. Procédé de fabrication d'un composant (1) pour un outil de moulage par injection (100) selon l'une des revendications 1 à 10, comprenant les étapes :
a) ébaucher une première plaque de distributeur (10) d'un distributeur (2) avec un dessus (11) et un dessous (12) ainsi qu'au moins deux tubes de matière (21, 22, 23, 24, 25, 26, 27, 28, 29) qui sont orientés transversalement par rapport au dessous (12) de la première plaque de distributeur (10) et qui sont reliés sur le dessous (12) à la première plaque de distributeur (10), à partir d'un bloc de matière monolithique, des tubes de matière (21, 22, 23, 24, 25, 26, 27, 28, 29) voisins étant à une certaine distance les uns des autres, distance correspondant à une fente (70, 71, 72, 73, 74, 75, 76, 77), au moins au niveau de leurs extrémités libres (61, 62, 63, 64, 65, 66, 67, 68, 69), la fente (70, 71, 72, 73, 74, 75, 76, 77) étant inférieure à 2 mm et étant une découpe au laser, une découpe au fil ou une érosion,
b) mise en place d'un canal d'écoulement (31, 32, 33, 34, 35, 36, 37, 38, 39) dans chaque tube de matière (21, 22, 23, 24, 25, 26, 27, 28, 29),
c) mise en place de canaux d'alimentation (41, 42, 43, 44, 45, 46, 47, 48, 49) dans la première plaque de distributeur (10), lesquels canaux d'alimentation débouchent sur le dessous (12) de la première plaque de distributeur (10) dans les canaux d'écoulement (31, 32, 33, 34, 35, 36, 37, 38, 39) des tubes de matière (21, 22, 23, 24, 25, 26, 27, 28, 29) et sont conçus ouverts sur le dessus (11).
